# EUROPEAN PATENT APPLICATION

(11) **EP 2 660 284 A1**
(43) Date of publication of application: **06.11.2013**
(21) Application number: 12166771.1
(22) Date of filing: 04.05.2012
(51) Int. Cl.: C08K 3/04, C08L 23/04, C08L 23/10, H01B 1/24

(54) **Electroconductive nanocomposite**

(71) Applicant: Université Catholique de Louvain, 1348 Louvain-La-Neuve (BE); Materia Nova A.S.B.L, 7000 Mons (BE)
(72) Inventor: Bonnaud, Leila, 59300 VALENCIENNES (FR); Bailly, Christian, 2000 ANTWERPEN (BE); Tao, Fangfang, 1348 LOUVAIN-LA-NEUVE (BE); Dubois, Philipe, 4260 BRAIVES (BE); Murariu, Oltea, 7000 MONS (BE)
(74) Representative: Connor, Marco Tom

(57) **Abstract**

The present invention concerns an electroconductive nanocomposite comprising a polyolefin matrix, carbon nanoparticles, and an additive, **characterized in that**, said additive is a thermoplastic elastomer selected from ethylene block copolymers or ethylene sequence copolymers. The nanocomposite of the present invention yields enhanced electrical conductivity and high impact strength with good thermal stability. A particularly preferred additive is SEPS.

## Description

### TECHNICAL FIELD

The present invention concerns electro-conductive carbon filled polyolefin nanocomposites. In particular, it concerns such nanocomposites yielding high impact strength and enhanced conductivity.

### BACKGROUND OF THE INVENTION

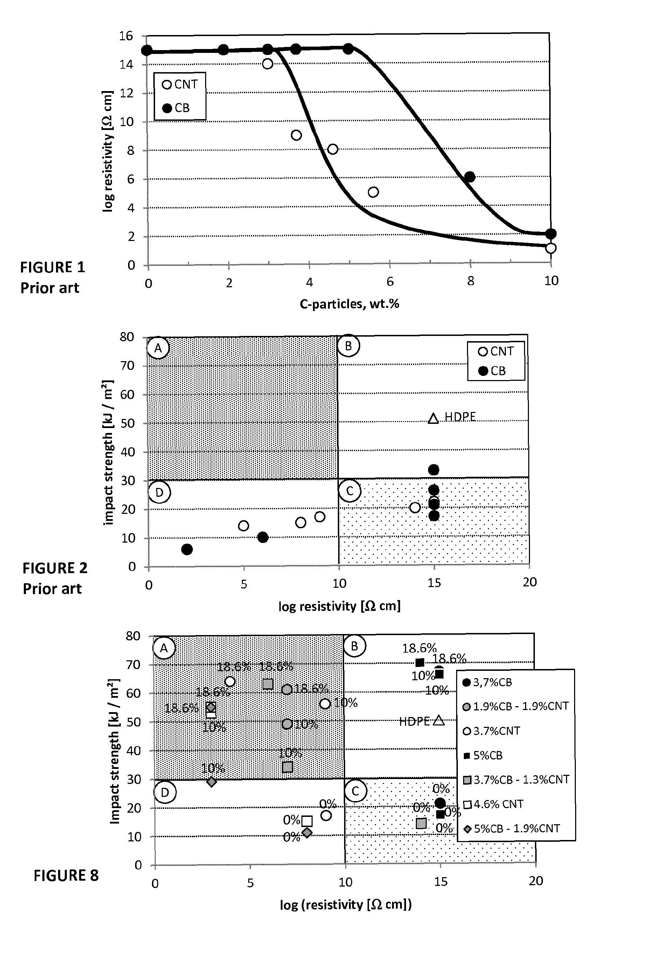

Polymers such as polyolefins are being used in many applications. Polyolefins, however, are poor electrical conductors and tend to accumulate electrostatic charges during use. This is particularly inconvenient for electronic components such as personal computers, mobile phones and the like, but also in applications in contact with inflammable substances such as petrol tanks in the automotive industry. By loading a polyolefin with carbonaceous micro- or nanoparticles, it is possible to render such insulating polyolefin sufficiently conductive to prevent any accumulation of electrostatic charges. Carbon black has been extensively used for its colouring properties, giving a black colour to the composite, and for increasing conductivity. The minimal load of carbonaceous particles required to establish a continuous path for the electrons to travel through the composite is called the percolation concentration, p_{c}. The percolation concentration depends on the polymeric matrix, the carbonaceous particles, and the process of blending these two components together. Figure 1 shows the evolution of the resistivity measured in Ω cm, which is the reciprocal of the conductivity as a function of weight % content of carbon black (CB = black circles) in HDPE. It can be seen that the resistivity remains very high until the carbon black concentration reaches the percolation concentration at about 7.0 wt.% carbon black, whence the resistivity drops quite rapidly.

Other carbonaceous nanoparticles can be used as conductive fillers, such as nanofibres and, in particular, carbon nanotubes. Carbon nanotubes (CNT) have attracted much attention in the last decades. It can be seen in Figure 1 that CNT has a lower percolation concentration in HDPE of the order of 5.0 wt% (cf. white circles), than carbon black (cf. black circles).

One major drawback of blending carbonaceous nanoparticles with a polymeric matrix is that the thus obtained nanocomposites become quite brittle. Figure 2 illustrates the notched impact strength (ASTM D256) as a function of resistivity of HDPE (white triangle) having a high resistivity of the order of 10¹⁵ Ω cm and an impact strength of 51 kJ m², compared with HDPE nanocomposites filled with various amounts of carbon black (black circles) and carbon nanotubes (white circles). The graph is divided into four quadrants (A)-(D). HDPE is in the (B)-quadrant. Small amounts of carbon black or carbon nanotubes bring the properties of the nanocomposites down into quadrant (C), namely the worst with high resistivity and low impact strength. Increasing the amounts of nanotubes and carbon black above their respective percolation concentrations, shifts the properties into the quadrant (D) characterized by low values of resistivity but also low values of impact strength. The most attractive quadrant (A) (= dark shaded quadrant) with low resistivity and high impact resistance remains, however, desperately empty.

WO2009/020261 discloses an electro-conductive thermoplastic resin composition with good electro-conductivity and impact resistance. The electro-conductive thermoplastic resin composition comprises 80 to 99.7 parts by weight of a thermoplastic resin, 0.1 to 5 parts by weight of a carbon nanotube, 0.1 to 5 parts by weight of an impact modifier, and 0.1 to 10 parts by weight of a hydrophobic polymer additive, based on a total of 100 parts by weight of the electro-conductive thermoplastic resin composition. Although polyolefin matrices are cited in this document, the examples are carried out with polycarbonate only, and no additive specific to polyolefin matrices is cited. Furthermore, the nanocomposites disclosed in WO2009/020261 require the addition to the blend of a thermoplastic resin and carbon nanotubes of at least two additional components: an impact modifier and a hydrophobic polymer additive. The acquisition, storage, and blending of not less than four components complicate the manufacturing process accordingly and increases the production costs.

The present invention provides a cost effective solution for increasing the impact strength of polyolefin nanocomposites loaded with carbonaceous particles and for increasing the conductivity of polyolefin nanocomposites loaded with carbon nanotubes or with a mixture of carbon nanotubes and carbon black. This and other advantages of the present invention are presented in continuation.

### SUMMARY OF THE INVENTION

The present invention is defined in the appended independent claims. Preferred embodiments are defined in the dependent claims. In particular, the present invention concerns an electroconductive nanocomposite comprising a polyolefin matrix, carbon nanoparticles, and an additive, **characterized in that**, said additive is a thermoplastic elastomer selected from ethylene block copolymers or ethylene sequence copolymers. The carbon nanoparticles preferably comprise anisotropic, more preferably orthotropic particles. Preferred carbon nanoparticles comprise single or multiwall carbon nanotubes (CNT). Alternatively or additionally the carbon nanoparticles may comprise carbon black or carbon nanofibres. In a preferred embodiment, the carbon nanoparticles comprise a mixture of carbon nanotubes and carbon black. The carbon nanoparticles are typically present in an amount comprised between 0.1 and 10.0 wt.% carbon nanoparticles, preferably between 0.5 and 7.0 wt%, more preferably between 2.0 and 6.0 wt.%, most preferably between 3.0 and 5.0 wt.%.

The polyolefin matrix can be any type of polyolefin most suitable for a specific application. In particular, the following polyolefins are particularly suitable for the present invention: polyethylene (PE), polypropylene (PP), polymethylpentene (PMP), polybutene-1 (PB-1), High density polyethylene (HDPE), low density polyethylene (LDPE), medium density polyethylene (MDPE), linear low density polyethylene (LLDPE), mixtures and copolymers thereof.

The additive is preferably selected from ethylene vinyl acetate (EVA), a block copolymer of ethylene, acrylic ester and maleic anhydride (EAEsMA), a block copolymer of styrene, ethylene, butylene and styrene (SEBS), a block copolymer of styrene, ethylene, propylene and styrene (SEPS). A particularly advantageous additive is SEPS. The additive is preferably present in an amount comprised between 2 and 30 wt.%, more preferably from more than 5 wt.% to 25 wt.%, most preferably between 10 and 20 wt.%.

A nanocomposite according to the present invention can have an impact strength according to IZOD ASTM D256 of at least 50%, preferably at least 70%, more preferably at least 90% of the impact strength of the polyolefin with no carbon nanoparticles. It may even have an impact strength higher than the one of the polyolefin with no carbon nanoparticles.

It was also observed that upon cooling at a cooling rate of 3°± 1 °C / min, the conductivity measured at a temperature below the crystallization temperature of the polyolefin matrix could be quite similar to the one in the liquid phase. In the present invention, the conductivity below the crystallization temperature of the polyolefin matrix is preferably not lower by more than 10% than the conductivity measured at a temperature of 10°C above the melt temperature. It can even increase with lowering the temperature below the crystallization temperature. This phenomenon could be related to the observation that the size of the polyolefin crystals in the composite could be smaller in the presence of the additive than in the absence thereof.

A nanocomposite according to the present invention is produced by mixing in an extruder a polyolefin, carbon nanoparticles, and an additive as discussed supra, at a temperature above the melt temperature of the polyolefin matrix, extruding a profile and forming nanocomposite granules therefrom. In a preferred embodiment, a master batch is prepared by mixing the carbon nanoparticles with the additive by melting the additive or in a solvent, and said master batch is added to the molten polyolefin matrix in the extruder.

An additive as discussed supra is advantageously used to increase the conductivity and/or the impact strength of a nanocomposite comprising a polyolefin matrix loaded with carbon nanoparticles.

### Brief description of the Figures

For a fuller understanding of the nature of the present invention, reference is made to the following detailed description taken in conjunction with the accompanying drawings in which:
**Figure 1**: shows a graphical representation of the evolution of the resistivity of HDPE loaded with carbon nanoparticles in the absence of an additive, as a function of the content of carbon nanoparticles (black circles: carbon black, white circles: CNT).
**Figure 2**: shows the impact strength as a function of resistivity of the nanocomposites represented in Figure 1.
**Figure 3**: shows a graphical representation of the evolution of the resistivity of HDPE loaded with CNT and comprising different amounts of SEPS, as a function of the content of CNT (white circles: no SEPS, grey circles: 5 wt.% SEPS, black circles: 19 wt.% SEPS).
**Figure 4**: shows a graphical representation of the evolution of the resistivity of the HDPE of Figure 3 loaded with various amounts of CNT as a function of the amount of SEPS, (white circles: 3 wt.% CNT, grey circles: 3.7 wt.% CNT, black circles: 4.6 wt.% CNT).
**Figure 5**: shows a graphical representation of the impact strength of the HDPE of Figure 3 loaded with CNT and comprising different amounts of SEPS, as a function of the content of CNT (white circles: no SEPS, grey circles: 5 wt.% SEPS, black circles: 19 wt.% SEPS).
**Figure 6**: shows a graphical representation of the evolution of the resistivity of HDPE loaded with various amounts of CNT (white symbols), CB (black symbols), and mixtures thereof (grey symbols), as a function of the amount of SEPS.
**Figure 7**: shows a graphical representation of the impact strength of HDPE of Figure 6 loaded with various amounts of CNT, CB and mixtures thereof, as a function of the amount of SEPS, as a function of the content of CNT.
**Figure 8**: shows the impact strength as a function of resistivity of the nanocomposites represented in Figures 6 and 7 (%-values correspond to SEPS contents).
**Figure 9**: shows the effect of process conditions (blending time) on the resistivity of nanocomposites loaded with CNT with (shaded columns) and without (white columns) SEPS.
**Figure 10**: shows the effect of the type of additive used on the resistivity of nanocomposites loaded with CNT for two different blending times: 10 min (white columns) and 20 min (shaded columns).

### DETAILED DESCRIPTION OF THE INVENTION

As illustrated in Figure 1 the amount of carbon nanoparticles required to drop the resistivity of a polyolefin to a desired value depends on the type of nanoparticle used. Carbon black (CB) is commonly used because of its low cost. It can be seen, however, that more CB (black circles) is required to reach the percolation concentration than carbon nanotubes (CNT). CNT's or fullerenes are relatively new materials, and their cost is substantially higher than the one of CB, but has been steadily decreasing in the last decade as the demand increases. With a lower percolation concentration than CB, their use instead of, or in combination with CB becomes economically interesting, and this trend will continue in the future as their price decreases. The impact strength of polyolefins loaded with CB or CNT alike, however, drops to values too low for many applications, as can be seen in Figure 2 already discussed in the section BACKGROUND ART. The present invention proposes a solution for providing polyolefin nanocomposites with increased conductivity and/or impact resistance, such as to shift the points of Figure 2 up into quadrant (B) with higher impact strength, and preferably into quadrant (A) with higher impact strength and conductivity (i.e., lower resistivity) as illustrated in Figure 8 discussed more in detail in continuation. For applications wherein electrostatic charges must be dissipated, the resistivity of the nanocomposite should be of the order of 10⁶ Ω cm and lower. The amount of carbon nanoparticles required for reaching the desired resistivity (= reciprocal of conductivity) is slightly above the percolation concentration. Using more nanoparticles would increase the cost and also decrease the impact strength of the nanocomposite. Referring to Figure 1, about 4.5 wt.% CNT is needed to drop the resistivity of HDPE to about 10⁶Ω cm and about 8.0 wt.% CB for the same resistivity, yielding an impact strength of less than 20 kJ /m² which is quite insufficient for most applications (cf. Figure 2).

A nanocomposite according to the present invention comprises three essential components:
- A polyolefin matrix;
- Carbon nanoparticles, and
- A thermoplastic elastomer additive selected from ethylene block copolymers or ethylene sequence copolymers.

The polyolefins used in the present invention may be any olefin homopolymer or copolymer of an olefin and one or more comonomers.. The olefin can for example be ethylene, propylene, 1-butene, 1-pentene, 1-hexene, 4-methyl-1-pentene or 1-octene, and examples of cycloolefins include cyclopentene, cyclohexene, cyclooctene and norbornene. The comonomer, if any, is preferably, but not necessarily an olefin as defined above. Preferred polyolefins for use in the present invention are polyethylene (PE), polypropylene (PP), polymethylpentene (PMP), poly1-butene (PB-1), low density polyethylene (LDPE), medium density polyethylene (MDPE), High density polyethylene (HDPE), linear low density polyethylene (LLDPE), mixtures and copolymers thereof. The choice of a specific polyolefin as matrix depends on the specific application of the nanocomposite.

The carbon nanoparticles preferably comprise anisotropic, more preferably orthotropic particles. In particular, preferred orthotropic carbon nanoparticles comprise single or multiwall carbon nanotubes (CNT). Carbon nanotubes are allotropes of carbon with a cylindrical nanostructure and are available on the market with a variety of geometries with different aspect ratios, lengths, diameters, number of walls, etc. Other fullerene geometries can also be used as carbon nanoparticles in the present invention, but preliminary results suggest that CNT's are advantageous.

The carbon nanoparticles of the present invention can also be carbon black or carbon nanofibres. Using carbon black alone in nanocomposites according to the present invention allowed the impact strength to be considerably enhanced compared with the one of nanocomposites without additive, but not quite the electrical conductivity. Carbon black is often used as colorant to give a part a black colour. In applications wherein the conductivity is not a specific requirement, carbon black can be used in nanocomposites according to the present invention in order to yield black polyolefin parts with high impact strength. The cost of carbon black is lower than the one of CNT's, although the latter decreases steadily. A mixture of carbon nanotubes and carbon black may yield an advantageous cost to properties trade off.

The amount of carbon nanoparticles in nanocomposites according to the present invention depends *inter alia* on the specific polyolefin-nanoparticles system used, and is preferably at least equal to the percolation concentration of said system. In particular, the amount of carbon nanoparticles is comprised between 0.1 and 10.0 wt.%, preferably between 0.5 and 7.0 wt%, more preferably between 2.0 and 6.0 wt.%, most preferably between 3.0 and 5.0 wt.%. Unless otherwise indicated, all wt.%-values are herein expressed with respect to the total weight of the nanocomposite.

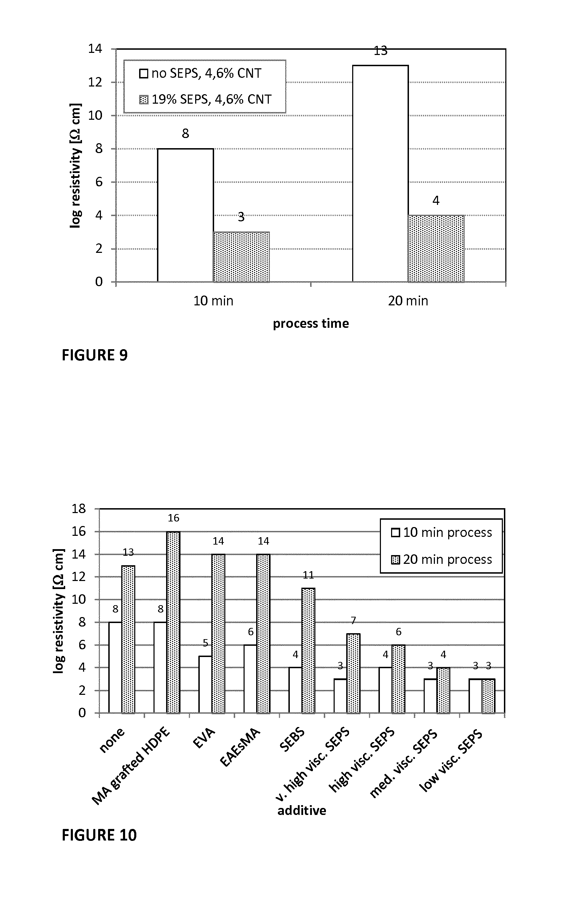

The thermoplastic elastomeric additive is a copolymer necessarily comprising ethylene monomers in its structure, such as for example, ethylene vinyl acetate (EVA). It is believed that the presence of ethylene monomers in the copolymer enhances the compatibility thereof with the polyolefin matrix and influences somehow the way the polyolefin matrix and the additive interact with the carbon nanoparticles. In this respect it is advantageous that the copolymer also comprises propylene monomers. Terpolymers are therefore preferred as additive, such as a block copolymer of ethylene, acrylic ester and maleic anhydride (EAEsMA). Preferred terpolymers are styrene terpolymers comprising ethylene and higher alkene monomers. Examples of terpolymers comprising ethylene and higher alkene monomers include a block copolymer of styrene, ethylene, butylene and styrene (SEBS) and a block copolymer of styrene, ethylene, propylene and styrene (SEPS). Based on preliminary tests, as illustrated in Figure 10, the lowest resistivity is obtained with terpolymers comprising ethylene and higher alkene monomers, such as SEPS and SEBS. SEPS is particularly preferred because the properties obtained therewith are quite independent on the processing conditions. The thermoplastic elastomer additive of the present invention is preferably present in an amount comprised between 2 and 30 wt.%, preferably from more than 5 wt.% to 25 wt.%, more preferably between 10 and 20 wt.%. Preferably no other additive is added to the composition to further alter the impact strength or the conductivity.

Tests were carried out with different nanocomposites to demonstrate the advantages yielded by the nanocomposites of the present invention. The matrix used was in all cases high density polyethylene (HDPE) MS201 BN-NA from Total Petrochemicals having a flow index of 6.0 g/10min at 21.6kg, 190°C. Two types of carbon nanoparticles were used: carbon nanotubes and carbon black. Carbon nanotubes (CNT) produced by FutureCarbon are thin homogeneous tubes with 10-20 concentrically bent single graphene layers with an average diameter of about 20 nm and purity of >98%. Carbon black (grade ENSACO 350) produced by TIMCAL is a conductive powder with a BET surface area of about 773m²/g. For all but some samples in Figure 10, the thermoplastic elastomer additive was SEPS Hybrar^{™} 7125 produced by Krurary co. Ltd, which has 20 wt.% of styrene content. The other additives illustrated in Figure 10 will be described together with Figure 10. The three components were blended using a Brabender internal mixer (Brabender GmbH & Co.) at a temperature of 190°C, for an initial time of 2 minutes at 30 rpm for the introduction of the corresponding amounts of the different components and the remaining process time at 60 rpm: the remaining process time was 8 min and 18 min to yield a total blending time at 190°C of 10 and 20 min, respectively Thin plates were produced by compression moulding the thus obtained compositions with an AGILA PE ZO hot press at a temperature of 190°C and a pressure of 150 bar (15 MPa). Samples were cut out of these plates for the electrical and impact tests.

The conductivity of the samples was determined as follows. Depending on the range of the electrical resistivity, electrical measurements were performed by using two complementary apparatuses. For samples having a resistivity higher than 10⁶ Ω cm, the measurement was performed on 80 x 100 x 3 mm plates with an electrometer (6517B Keithley) combined with a 8009 box from Keithley. For samples having a lower resistivity, measurements were performed on 10 x 60 x 3 mm plates using a Keithley multimeter 2700. Silver paint was coated on the surface of the samples to decrease the contact resistance. Impact tests were carried out on 10 x 60 x 3 mm plates with a notch. The samples were conditioned for at least 48 h at 20 ± 2°C under a relative humidity of 50 ± 3% and tested following standard ASTM D256 using a pendulum impact testing equipment.

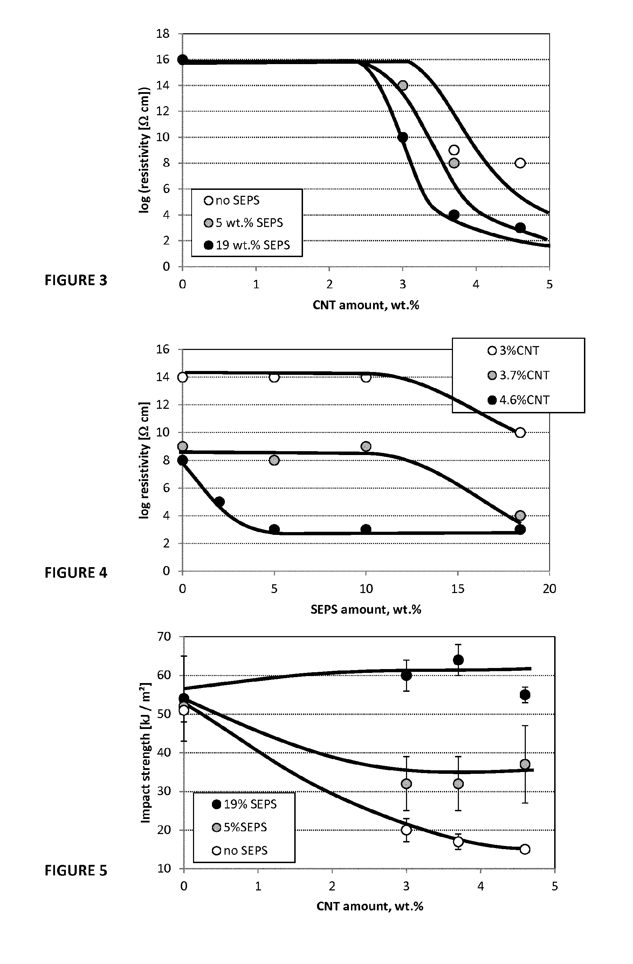

Figure 3 illustrates the resistivity as a function of CNT amount on nanocomposites comprising no SEPS (white circles, the same as in Figure 1), 5.0 wt.% SEPS (grey circles), and 19 wt.% SEPS (black circles). It can be seen that the resistivity decreases substantially with the addition of an additive according to the present invention. By adding various amounts of SEPS, the resistivity curves are shifted to the left, towards lower CNT concentrations. When, in the absence of SEPS, about 4.5 wt.% CNT is needed to drop the resistivity of HDPE to about 10⁶ Ω cm, less than 4.0 wt.% and about 3.0 wt.% CNT are needed to drop the resistivity to about 10⁶ Ω cm of HDPE loaded with 5 wt.% and 19 wt.% SEPS, respectively. Figure 4 shows how the resistivity evolves as a function of content of SEPS for various amounts of CNT. It can be seen that for a CNT load of 4.6 wt.%, little amounts of SEPS are needed to drop substantially the resistivity. For lower CNT contents, no effect was observed for SEPS contents of less than 10 wt.% whence it starts dropping for samples loaded with 3.7 and 3.0 wt.% CNT. In the absence of carbon nanoparticles, the addition of SEPS to HDPE does not affect the resistivity which remains steady at 10¹⁶ Ω cm regardless of how much SEPS is added.

As discussed supra, the addition of carbon nanoparticles drops the impact strength of the composite down to a level which is unacceptable for many applications. Figure 5 illustrates the impact strength as a function of CNT content measured on the composites characterized in Figure 3. It can be seen that, in the absence of CNT, the impact strength of HDPE remains quite unaffected by the addition any amount of SEPS. When adding CNT, however, the impact strength rapidly drops below 20 kJ / m² in the absence of SEPS (white circles), which is less than 40% of the impact strength of 51 kJ / m² measured on pure HDPE. The impact strength drops to only 60% of HDPE's, at slightly more than 30 kJ / m² when 5 wt.% SEPS is added to HDPE (grey circles). Surprisingly, the impact strength increases upon addition of up to 4.6 wt.% CNT (black circles) when 19 wt.% SEPS is added, thus reversing the embrittlement effect generally associated with the addition of carbon nanoparticles.

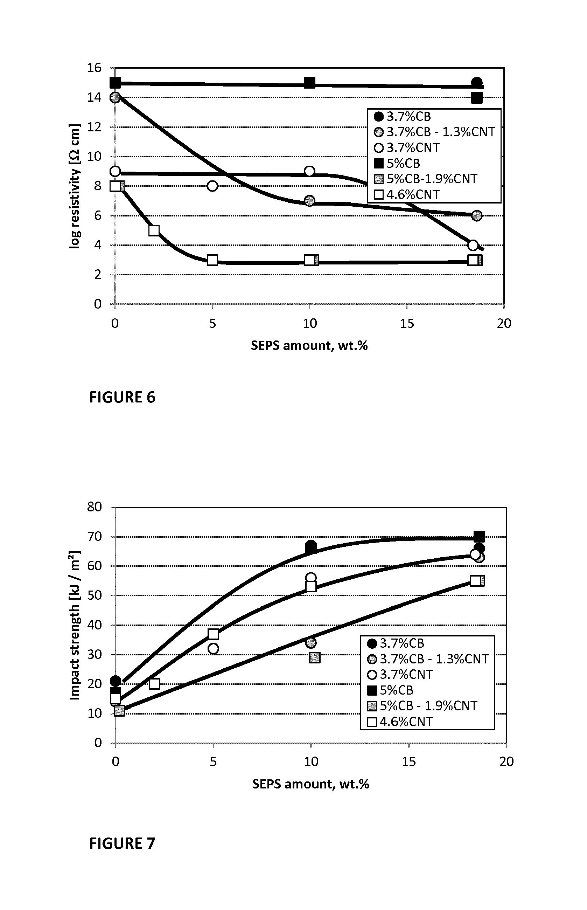

Figures 6 and 7 illustrate the evolution of the resistivity and the impact strength as a function of amount of SEPS with different carbon nanoparticle types and amounts: black symbols: CB only, white symbols: CNT only, and grey symbols: mixture of CB and CNT. It can be seen in Figure 6 that with CB amounts of up to 5.0 wt.% (black circles and squares), the resistivity of HDPE remains high at 10¹⁵ Ω cm, regardless of the presence of SEPS. The evolution of the resistivity as a function of SEPS content for CNT loaded HDPE (white circles and squares) was discussed supra with respect to Figure 4 and can be seen to drop very rapidly with 4.6 wt.% CNT, and only with the addition of at least 10 wt.% SEPS for an amount of 3.7 wt.% CNT. Mixtures of carbon black and carbon nanotubes (grey symbols) give very interesting results, with a rather rapid drop of the resistivity with 3.7 wt.% CB and 1.3 wt.% CNT (grey circles) and an evolution comparable with the one of a 5 wt.% CNT loaded HDPE for HDPE loaded with a mixture of 5 wt.% CB and 1.9 wt.% CNT.

The impact strength evolution as a function of SEPS content for different types and amounts of carbon nanoparticles represented in Figure 7 is quite interesting and unexpected. The impact strength increases substantially with the amount of SEPS blended with HDPE. Surprisingly, CB (black symbols) yields the highest impact strength, followed by CNT (white symbols). When it could be expected that a mixture of CB and CNT (grey symbols) would yield impact strength values comprised between the pure CB and pure CNT loaded nanocomposites, this is not the case and the impact strength of CB + CNT nanocomposites is lower than both CB and CNT nanoparticles for a same amount of SEPS. It can be seen that for high SEPS contents, however, high impact strength is obtained for all the types of carbon nanoparticles.

Figure 8 plots the impact strength as a function of resistivity of the samples illustrated in Figures 6 and 7 in a similar fashion as in Figure 2, arbitrarily dividing the graph into four quadrants (A)-(D), defined by a low-high resistivity boundary at 10¹⁰ Ω cm and a low-high impact strength boundary at 30 kJ / m², i.e., at 60% of the impact strength of pure HDPE (white triangle). The %-values next to each point indicate the wt.%-amount of SEPS present in said sample. As observed in Figure 2, regardless of the nature of the nanoparticles, the nanocomposites comprising no SEPS (labelled 0%) are all in the lower quadrants (C) and (D) with an impact strength lower than 20 kJ / m², insufficient for many applications. The composites comprising CB with no SEPS located in quadrant (C), with low impact strength and high resistivity, can be used in a very limited number of applications only. The CNT loaded composites located in quadrant (D) with a relatively low resistivity can be used in applications requiring electrostatic dissipation, but with no exposure to any sort of impact. The impact strength of CB-loaded nanocomposites (black symbols) increases substantially with the addition of 10 and 18.6 wt.% SEPS, but their resistivity remains constant at a high value of 10¹⁵ Ω cm. They are located in quadrant (B). Such CB-loaded HDPE composites can be used for applications were black parts with a high impact strength are required, but if electrostatic charges must be dissipated, other means must be used. The CNT loaded HDPE composites comprising 10 and 18.6 wt.% SEPS (white symbols) are all located in quadrant (A) with a high impact strength, higher than pure HDPE's, and quite a low resistivity. They are optimal for most applications requiring electrical conductivity under exposure to possible impacts. The price and availability of CNT may be in a short term a bar to some commodity products and high production volume applications like in the automotive industry. The cost of the nanocomposites can be reduced by mixing CB with CNT (grey symbols). It can be seen that with 10 wt.% SEPS, acceptable impact strength and resistivity values can be obtained, and with 18.6 wt.% SEPS, electrical and mechanical properties quite comparable with pure CNT loaded HDPE composites can be achieved, with lower cost materials.

The conductivity of CNT loaded HDPE composites with and without SEPS was measured during cooling from 200°C (HDPE is molten) down to below the crystallization temperature of HDPE at a rate of -3°C / min (not shown in the Figures). Traditional CNT-HDPE nanocomposites (without SEPS) generally present a drop in conductivity upon cooling through the crystallization temperature of the polyolefin matrix. The drop can be of the order of half an order of magnitude. This well-known phenomenon is generally believed to be due to the fact that CNT particles act as nucleating seeds promoting the crystallization of HDPE. It is assumed that the crystals of HDPE growing from the surface of CNT's may push the CNT particles away from each other and interrupt any continuous conductive path formed in the melt phase of the matrix, and thus form non-conductive barriers stopping the charge carriers. The same tests carried out with HDPE loaded with different amounts of CNT and comprising SEPS revealed that the drop in conductivity in the region of the crystallization temperature was much lower, generally not more than 10% of the conductivity measured at 10°C above the crystallization temperature, and very often the conductivity even increased upon crystallization of the HDPE instead of decreasing as expected. This is a strong indication that SEPS effect on the conductivity of carbon loaded polyolefin nanocomposites is related to some influence SEPS could have on the crystallization of the polyolefin. The mechanism of this effect is still under investigation. There is some evidence showing that the HDPE crystals in presence of SEPS are smaller in size than in the absence thereof.

The use of a thermoplastic elastomeric additive according to the present invention in polyolefin-carbon nanocomposites yields a number of additional advantages. It is known that thermal resistance of polyolefins is enhanced when they contain carbon nanoparticles. It is generally accepted that a thin protective layer of nanoparticles is formed and held in place by the charred fraction of the polyolefin matrix. Addition of a thermoplastic elastomeric additive according to the present invention has the advantage that the thermal resistance of the nanocomposite is maintained at its high level, allowing to yield a nanocomposite with conductivity, impact strength, and thermal resistance which are all higher than pure polyolefins.

As discussed above, terpolymers of ethylene and higher alkene, such as SEBS and, in particular, SEPS, are preferred thermoplastic elastomeric additives. Figure 9 illustrates another advantage of such additives, by comparing the resistivity of HDPE loaded with 4.6 wt.% CNT with (shaded columns) and without (white columns) SEPS and produced by blending the components for 10 and 20 min process time, respectively. It can be seen, that in the absence of SEPS (white columns), the resistivity increases by five orders of magnitude, from 10⁸ to 10¹³ Ω cm when the blending time is doubled from 10 to 20 min. Such process dependency of the resistivity is quite detrimental to the repeatability and consistency of the nanocomposites thus produced, as any deviation in the processing conditions between two samples may lead to totally different electrical properties. The addition of 19 wt.% SEPS to the CNT-HDPE nanocomposite stabilizes the electrical properties with respect to the process conditions. Like the graph of Figure 9, Figure 10 represents the resistivity of 4.6 wt.% CNT-HDPE nanocomposites as a function of the blending time for different types of additives (white columns = 10 min blending time and shaded columns = 20 min blending time). The sample labelled "none" comprises no additive and corresponds to the sample represented in Figure 9. As discussed supra, the resistivity is high and very dependent on processing time, with a variation of five orders of magnitude between 10 and 20 min processing time. The sample labelled "MA grafted HDPE is HDPE grafted with maleic anhydride available from Du Pont De Nemours. The resistivity is as high as without additive and the dependency thereof on processing time is even stronger. ethylene vinyl acetate (EVA), available from Exxon Mobil , and a block copolymer of ethylene, acrylic ester and maleic anhydride (EAEsMA) available from Arkema allow the substantial reduction of the resistivity down to 10⁵ to 10⁶ Ω cm after 10 min blending. The dependency of the resistivity on the processing conditions, however, remains strong. The effect of SEBS, available from Kraton Performance Polymers or Kuraray Co., Ltd is also process time dependent, but allows an even more substantial drop of the resistivity down to 10⁴ Ω cm after 10 min blending time. Four different SEPS grades having different viscosities were tested. The SEPS labelled "v. high visc. SEPS" has a melt flow index (MFI) at 230°C and 2.16 kg smaller than 0.1 g / 10 min, whilst the "high visc. SEPS" has a MFI at 190°C of 0.05 g / 10 min, the "med. visc. SEPS" has a MFI at 190°C of 0.3 g / 10 min (the same grade as plotted in Figure 9), and the "low visc. SEPS" has a MFI of 0.6 g / 10 min (all SEPS grades are available from Kuraray Co., Ltd). It can be seen that, like with SEBS, the resistivity after 10 min processing dropped down by four to five orders of magnitude with respect to the control sample "none" with no additive, to values of 10³-10⁴ Ω cm, but the dependency thereof with processing time is much less than with any other additive tested and is substantially nil for medium and low viscosity SEPS grades. The reproducibility of the electrical properties regardless of the processing conditions yielded by SEPS is particularly advantageous for any industrial applications.

The nanocomposites of the present invention open new doors to the use of polyolefins in applications requiring both electroconductivity and impact resistance, in applications in the fields of computers, mobile phones, and any electronic component requiring at least dissipation of electrostatic charges; this applies also to the automotive industry, like for example petrol tanks and the like. With the good thermal properties of the nanocomposites of the present inventions, applications under the hood can also be imagined. If variations in the processing conditions were to happen during production, the dependency of the electrical properties on processing time can be decreased down to nil with specific additives according to the present invention. The production of such nanocomposites is very simple, as a single additive is required. It suffices to mix in an extruder a polyolefin, carbon nanoparticles, and an additive as discussed above, at a temperature above the melt temperature of the polyolefin matrix, to extrude a profile and to form nanocomposite granules therefrom. Said granules can further be processed as well known to the person skilled in the art by techniques such as compression moulding, rotomoulding, injection moulding, extrusion, and also by blow moulding extruded or injection moulded preforms. To facilitate the blending of the components, a master batch can be prepared by mixing the carbon nanoparticles with the additive in a solvent or by melting the additive, followed by adding said master batch to the molten polyolefin matrix in the extruder. A fraction of polyolefin matrix may be added in a molten state to the master batch, prior to adding the master batch into the extruder. No variation of the electrical properties was observed between CNT loaded HDPE containing medium viscosity SEPS produced by direct blending of the components in the extruder, and by preparation of a master batch prior to blending with HDPE.

## Claims

1. Electroconductive nanocomposite comprising a polyolefin matrix, carbon nanoparticles, and an additive, **characterized in that**, said additive is a thermoplastic elastomer selected from ethylene block copolymers or ethylene sequence copolymers.

2. Nanocomposite according to claim 1, wherein the carbon nanoparticles comprise anisotropic, preferably orthotropic particles, more preferably the carbon nanoparticles comprise single or multiwall carbon nanotubes.

3. Nanocomposite according to claim 1 or 2, wherein the carbon nanoparticles comprise carbon black or carbon nanofibres.

4. Nanocomposite according to claims 2 and 3, comprising both carbon nanotubes and carbon black.

5. Nanocomposite according to any of the preceding claims comprising between 0.1 and 10.0 wt.% carbon nanoparticles, preferably between 0.5 and 7.0 wt%, more preferably between 2.0 and 6.0 wt.%, most preferably between 3.0 and 5.0 wt.%.

6. Nanocomposite according to any of the preceding claims, wherein the additive is selected from ethylene vinyl acetate (EVA), a block copolymer of ethylene, acrylic ester and maleic anhydride (EAEsMA), a block copolymer of styrene, ethylene, butylene and styrene (SEBS), a block copolymer of styrene, ethylene, propylene and styrene (SEPS), preferably the additive is SEPS.

7. Nanocomposite according to any of the preceding claims, wherein the additive is present in an amount comprised between 2 and 30 wt.%, preferably from more than 5 wt.% to 25 wt.%, more preferably between 10 and 20 wt.%.

8. Nanocomposite according to any of the preceding claims, wherein the polyolefin matrix is selected from the group of polyethylene (PE), polypropylene (PP), polymethylpentene (PMP), polybutene-1 (PB-1), High density polyethylene (HDPE), low density polyethylene (LDPE), medium density polyethylene (MDPE), linear low density polyethylene (LLDPE), mixtures and copolymers thereof.

9. Nanocomposite according to any of the preceding claims having an impact strength according to IZOD ASTM D256 of at least 50%, preferably at least 70%, more preferably at least 90% of the impact strength of the polyolefin with no carbon nanoparticles, most preferably the impact strength of the nanocomposite is higher than the one of the polyolefin with no carbon nanoparticles.

10. Nanocomposite according to the preceding claim, wherein upon cooling at a cooling rate of 3°± 1 °C / min, the conductivity measured at a temperature below the crystallization temperature of the polyolefin matrix is not lower than the conductivity measured at a temperature of 10°C above the melt temperature of the polyolefin matrix by more than 10% and preferably increases with lowering the temperature below the crystallization temperature.

11. Nanocomposite according to any of the preceding claims, wherein the size of the polyolefin crystals in the composite is smaller in the presence of the additive than in the absence thereof.

12. Process for producing a nanocomposite according to any of the preceding claims comprising the following steps:
• mixing in an extruder a polyolefin, carbon nanoparticles, and an additive as defined in any of claims 1 to 7, at a temperature above the melt temperature of the polyolefin matrix, and
• extruding a profile and forming nanocomposite granules therefrom.

13. Process according to the preceding claim, wherein a master batch is prepared by mixing the carbon nanoparticles with the additive in a solvent or by melting the additive, and wherein said master batch is added to the molten polyolefin matrix in the extruder.

14. Use of an additive as defined in claim 1 or 5 for increasing the conductivity and/or the impact strength of a nanocomposite comprising a polyolefin matrix loaded with carbon nanoparticles.
